# EUROPÄISCHE PATENTSCHRIFT

(11) **EP 2 754 604 B1**
(45) Veröffentlichungstag und Bekanntmachung des Hinweises auf die Patenterteilung: **23.12.2015**
(21) Anmeldenummer: 14150767.3
(22) Anmeldetag: 10.01.2014
(51) Int. Cl.: B62D 53/08, B62D 7/06, B60D 1/01, B62D 13/02

(54) **Satteldrehplateau**
Rotating saddle plateau
Plateau pivotant de sellette

(30) Priorität: 10.01.2013 DE 102013200252
(43) Veröffentlichungstag der Anmeldung: 16.07.2014
(73) Patentinhaber: Transport Industry Development Centre B.V., 5692 GA Son en Breugel (NL)
(72) Erfinder: Dobbelaar, Jos Robertus Leonardus, 5445 PA Landhorst (NL); Willems, Bastiaan Wilhelmus Cornelus, 5525 BB Duizel (NL)
(74) Vertreter: Mehler Achler

(56) Entgegenhaltungen:
- DE-A1- 10 312 302
- DE-A1-102007 020 770
- US-A- 5 066 035
- US-A1- 2009 134 601
- US-A1- 2011 089 667
- US-B2- 7 451 995

## Beschreibung

Die Erfindung betrifft ein Satteldrehplateau gemäß dem Oberbegriff des Anspruchs 1.

Solche Satteldrehplateaus finden in Sattelaufliegern Verwendung und weisen einen Drehteller mit einem Königszapfen auf, der in einem Drehkranz drehbar gelagert ist. Der Drehkranz ist wiederum an einer Aufliegerplatte befestigt, die im Boden des Sattelaufliegers montiert ist. Bei Kurvenfahrten werden der Drehteller und die Achse des Königszapfens relativ zum Drehkranz gedreht. Diese Drehbewegung des Drehtellers wird genutzt, um bspw. über ein Gestänge oder eine andere Übertragungseinrichtung die Räder des Sattelaufliegers zu lenken.

Unterschiedliche Satteldrehplateaus sind bspw. aus der DE 20 2010 014 787 U1 für einen Anhänger, oder aus der DE 697 10 907 T2 bzw. der DE 20 2005 015 120 U1 für Sattelauflieger bekannt.

Da die von der Zugmaschine auf den Sattelauflieger ausgeübten Zugkräfte über den Königszapfen und somit über das Satteldrehplateau in den Auflieger eingeleitet werden, muss das Satteldrehplateau eine vorgegebene Stabilität und Biegesteifigkeit aufweisen.

Die Aufliegerplatten werden daher meist mit großer Plattendicke ausgeführt oder an den Stirnseiten mit senkrecht zur Aufliegerplatte angeordneten Versteifungsplatten versehen. Diese Versteifungsplatten an der Stirnseite müssen in einem separaten Schritt angeschweißt werden, was die Herstellung des Satteldrehplateaus verteuert. Außerdem verursachen diese Versteifungsplatten ein zusätzliches Gewicht, was unter dem Gesichtspunkt der Treibstoffeinsparung nachteilig ist.

Auch sind doppelwandige Aufliegerplatten bekannt, wobei zwei Platten über Distanzstege beabstandet zueinander angeordnet sind.

Ein Satteldrehplateau mit einem Distanzring ist bspw. aus der DE 103 12 302 A1 bekannt.

Aufgabe der Erfindung ist es, ein Satteldrehplateau zu schaffen, das auf einfache und kostengünstige Weise ohne Einbußen an Steifigkeit hergestellt werden kann.

Diese Aufgabe wird mit einem Satteldrehplateau gemäß den Merkmalen des Anspruchs 1 gelöst.

Die Aufliegerplatte, die vorzugsweise rechteckig ausgebildet ist, weist an den ersten und zweiten Querrändern abgebogene erste und zweite Schenkel auf, die die erforderliche Steifigkeit in Querrichtung gewährleisten, sodass auf beispielsweise die senkrechten Versteifungsplatten verzichtet werden kann.

Die abgebogenen Schenkel sind vorzugsweise integraler Bestandteil der Aufliegerplatte und können bereits bei der Plattenherstellung z. B. in einer Abkantmaschine hergestellt und somit vorgefertigt werden. Ein zusätzlicher Schweißvorgang entfällt ebenso wie eine eventuell deutlich größere Plattenstärke, um die entsprechende Steifigkeit zu erzielen.

Vorzugsweise erstrecken sich die abgebogenen Schenkel über mindestens 50% der Breite B der Aufliegerplatte, insbesondere über die gesamte Breite B der Aufliegerplatte. Die Quersteifigkeit der Aufliegerplatte wird dadurch weiter verbessert.

Die beiden abgebogenen Schenkel erstrecken sich vorzugsweise bezüglich der Ebene der Aufliegerplatte in entgegengesetzte Richtungen. Dies bedeutet, dass im eingebauten Zustand der eine Schenkel nach oben und der andere Schenkel nach unten gerichtet ist.

Wenn das Satteldrehplateau in einem Sattelauflieger montiert ist, wird an der Oberseite des Drehtellers z. B. eine Lenkstange drehbar angeordnet, die mit dem Lenkmechanismus der Aufliegerräder verbunden ist. Die Lenkstange erstreckt sich hierbei über einen Querrand der Aufliegerplatte. Es ist von Vorteil, wenn der Schenkel an diesem Querrand nach unten gebogen ist, damit der nötige Raum für die Lenkstange nicht beeinträchtigt wird.

Vorzugsweise ist der erste Schenkel bezogen auf die Ebene der Aufliegerplatte um einen Winkel α₁ mit 0<α₁≤180° abgebogen. Es ist von besonderem Vorteil, wenn der Winkel α₁ 80° bis 100° insbesondere α₁ = 90° beträgt, weil in dieser abgebogenen Stellung die größere Steifigkeit erreicht wird.

Der zweite Schenkel ist bezogen auf die Ebene der Aufliegerplatte vorzugsweise um einen Winkel α₂ abgebogen, wobei 0< α₂≤180° vorzugsweise 0 < α₂ ≤90° gilt. Diese geringere Abbiegung hat den Vorteil, dass sie relativ einfach herstellbar ist.

Vorzugsweise weist mindestens der zweite Schenkel mindestens einen ersten Schenkelabschnitt und einen zweiten Schenkelabschnitt auf. Diese Schenkelabschnitte sind unterschiedlich zueinander gebogen ausgeführt.

Vorzugsweise ist der erste Schenkelabschnitt um den Winkel α₂ gebogen, während der zweite Schenkelabschnitt vorzugsweise parallel zu der Ebene der Aufliegerplatte angeordnet ist.

Die Dicke D1 der Aufliegerplatte beträgt vorzugsweise 8 mm bis 20 mm, besonders bevorzugt 10 mm bis 14 mm, insbesondere 12 mm.

Die Breite B_{S1} des ersten Schenkels beträgt vorzugsweise 25 mm bis 120 mm, besonders bevorzugt 60 mm bis 80 mm, insbesondere 70 mm.

Die Breite B_{S2} des zweiten Schenkels beträgt vorzugsweise 20 mm bis 200 mm, besonders bevorzugt 100 mm bis 150 mm, insbesondere 125 mm.

Die genannten Breiten B_{S1} und B_{S2} haben den Vorteil, dass die erforderliche Steifigkeit erreicht wird in Kombination mit einer niedrigen Einbauhöhe und niedrigen Herstellkosten.

Um die Steifigkeit in Längsrichtung, d.h. im Bereich der Längsränder zu verbessern, ist es von Vorteil, wenn dort auf Randabschnitten der Aufliegerplatte jeweils mindestens eine Versteifungsplatte befestigt ist. Diese Versteifungsplatte ist vorzugsweise an der Oberseite, d.h. an der dem Königszapfen abgewandten Seite des Satteldrehplateaus angeordnet. An der Oberseite der Aufliegerplatte steht hierzu der nötige Bauraum zur Verfügung.

Es ist von Vorteil, wenn die Versteifungsplatte bündig mit dem Längsrand der Aufliegerplatte abschließt. Dies hat den Vorteil, dass die Kräfte direkt in das Chassis des Sattelaufliegers, insbesondere in den Rahmen des Sattelaufliegers eingeleitet werden können.

Vorzugsweise weisen die Versteifungsplatten in Richtung zu den Querrändern Verbreiterungen auf. Diese Verbreiterungen befinden sich im Wesentlichen in den Eckabschnitten der Aufliegerplatte und haben daher den Vorteil, dass die Gesamtsteifigkeit des Satteldrehplateaus verbessert wird, ohne das Gesamtgewicht unnötig zu vergrößern.

Vorzugsweise sind mindestens eine erste Versteifungsplatte und eine zweite Versteifungsplatte übereinander angeordnet. Diese Art Sandwichbauweise hat den Vorteil, dass auf einfache Weise die gewünschte Steifigkeit erreicht und eingestellt werden kann.

Vorzugsweise nimmt die Größe der Versteifungsplatten mit zunehmendem Abstand von der Aufliegerplatte ab. Die auf der Aufliegerplatte aufliegende Versteifungsplatte weist somit die größte Fläche auf.

Die Dicken (D₂ und D₃) der mindestens zwei Versteifungsplatten liegen vorzugsweise im Bereich von 8 mm bis 20 mm, besonders bevorzugt im Bereich von 10 mm bis 15 mm, insbesondere bei 12 mm.

Die Dicken (D₁ bis D₃) von Aufliegerplatte und Versteifungsplatten addieren sich vorzugsweise auf einen Wert von 20 mm bis 60 mm, besonders bevorzugt auf einen Wert von 30 mm bis 40 mm, insbesondere auf einen Wert von 36 mm, was der herkömmlichen Plattenstärke der Aufliegerplatte gemäß des Standes der Technik entspricht. Vorzugsweise sind die Versteifungsplatten aus demselben Material gefertigt wie die Aufliegerplatte.

Beispielhafte Ausführungsformen der Erfindung werden nachfolgend anhand der Zeichnungen näher erläutert.

Es zeigen:
- Figur 1: eine perspektivische Draufsicht auf ein Satteldrehplateau im eingebauten Zustand,
- Figur 2: ein Satteldrehplateau in perspektivischer Darstellung und
- Figur 3: ein Satteldrehplateau gemäß der Figur 2 in Seitenansicht.

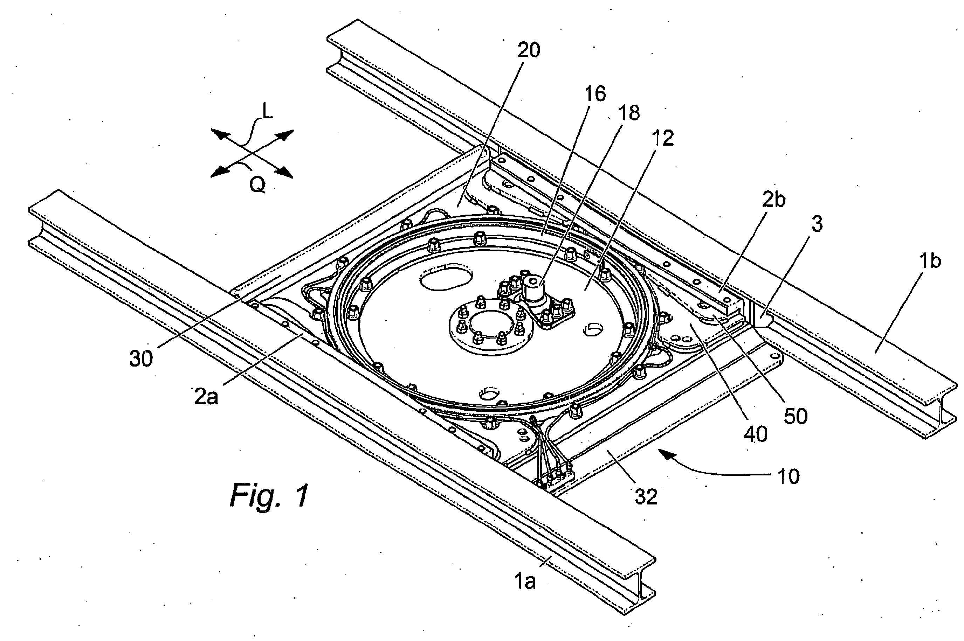

In der Figur 1 sind zwei Rahmenelemente 1 a und 1 b eines Bodens eines Sattelaufliegers dargestellt, an denen ein Satteldrehplateau 10 befestigt ist. Die Befestigung erfolgt über an den Rahmenelementen 1a, 1b angeordnete Distanzelemente 3 und jeweils einer Befestigungsschiene 2a, 2b, die mit den Längsrändern 24a, 24b des Satteldrehplateaus 10 verschraubt sind. Das Satteldrehplateau 10 weist eine rechteckige Aufliegerplatte 20 auf, die an den Querrändem 26a, 26b mit einem ersten abgebogenen Schenkel 30 und einem zweiten abgebogenen Schenkel 32 versehen ist. An der Aufliegerplatte 20 ist ein Drehkranz 16 angeordnet, der einen Drehteller 12 trägt, an dessen Unterseite ein Königszapfen 14 angeordnet ist. An der Oberseite des Drehtellers 12 ist ein Zapfen 18 außermittig angeordnet, an dem eine Lenkstange (nicht dargestellt) angreift, die bei Kurvenfahrten die Drehkräfte auf den Lenkmechanismus der Aufliegerräder (nicht dargestellt) überträgt.

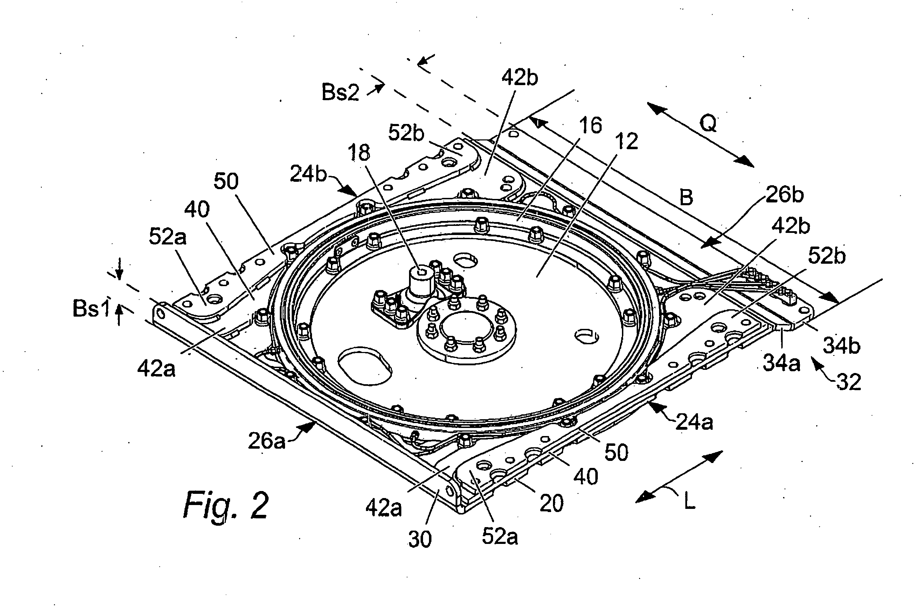

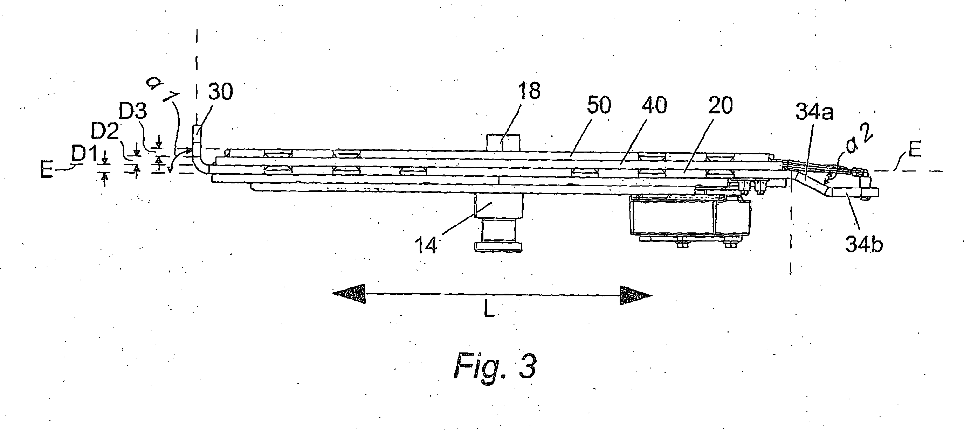

Die Längs- und die Querrichtungen L bzw. Q sind in der Figur 1 mit Pfeilen gekennzeichnet. Diese Pfeile finden sich in gleicher Weise in der Figur 2, wo ein Satteldrehplateau 10 ohne Rahmenelemente 1 a, 1 b vergrößert, perspektivisch dargestellt ist. Die Aufliegerplatte 20 weist am Querrand 26a den abgebogenen ersten Schenkel 30 auf, der gegenüber der Ebene E der Aufliegerplatte 20 um 90° nach oben gebogen ist. In der Figur 3 ist der Winkel α₁ mit 90° eingezeichnet.

Am gegenüberliegenden Querrand 26b ist der zweite abgebogene Schenkel 32 angeordnet, der aus zwei Schenkelabschnitten 34a, b besteht. Der erste Schenkelabschnitt 34a ist um einen Winkel α₂ von ca. 30° nach unten abgebogen, an den sich der zweite Schenkelabschnitt 34b anschließt, der parallel zur Ebene E der Aufliegerplatte 20 angeordnet ist. Beide Schenkel 30 und 32 erstrecken sich über die gesamte Breite B der Aufliegerplatte 20. Dadurch wird eine optimale Versteifung in Querrichtung erzielt.

Außerdem sind an den Längsrändern 24a, b Versteifungsplatten 40 und 50 angeordnet, die bündig mit den Längsrändern 24a,b abschließen. Die Versteifungsplatten 40 und 50 sind aufgeschweißt. Die Fläche der ersten Versteifungsplatte 40 ist größer als die Fläche der zweiten Versteifungsplatte 50. Beide Versteifungsplatten erstecken sich über fast die gesamte Länge der Aufliegerplatte 20, wobei die Versteifungsplatten 40, 50 ausgehend von ihrer Mitte in Richtung zu den Querrändern 26a, b jeweils zwei Verbreiterungen 42a, 42b bzw. 52a, 52b aufweisen. Diese Verbreiterungen 42a,b, 52a,b bewirken eine Versteifung in den Eckbereichen der Aufliegerplatte 20. Die Versteifungsplatten 40, 50 weisen in ihrer Mitte die geringste Breite auf und verbreitern sich kontinuierlich in Richtung auf die Querränder 26a, b. Die Verbreiterungen 42a,b, 52a,b weisen ihre größte Breite an den Enden der Versteifungsplatten 40, 50 in der Nähe der Querränder 26a,b auf. In der hier gezeigten Ausführungsform sind die Verbreiterungen 42a,b, 52a,b an ihren Enden gerundet ausgeführt. Die Verbreiterungen 42a,b, 52a,b bilden auf Grund ihrer unterschiedlichen Flächen in den Eckbereichen der Aufliegerplatte 20 eine gestufte Anordnung.

Figur 3 zeigt eine Seitenansicht des Satteldrehplateaus 10.

Die Dicken der einzelnen Platten 20, 40, 50 sind in der Figur 3 mit D₁, D₂ und D₃ gekennzeichnet. Außerdem sind die Winkel α₁ und α₂ eingetragen. In der hier gezeigten Ausführungsform wurde der Winkel α₂ des ersten Schenkelabschnitts 34a, die Breite des Schenkels und die parallele Ausrichtung des Schenkelabschnitts 34b zur Ebene E der Aufliegerplatte 20 so gewählt, dass das Satteldrehplateau 10 sich innerhalb der "Gooseneck contour" gemäß ISO1726 befindet.

### Bezugszeichenliste

- 1a, b: Rahmenelement des Sattelaufliegers
- 2a, b: Befestigungsschiene
- 3: Distanzelement

- 10: Satteldrehplateau
- 12: Drehteller
- 14: Königszapfen
- 16: Drehkranz
- 18: Zapfen

- 20: Aufliegerplatte
- 24a,b: Längsrand
- 26a,b: Querrand

- 30: erster Schenkel
- 32: zweiter Schenkel
- 34a: erster Schenkelabschnitt
- 34b: zweiter Schenkelabschnitt

- 40: erste Versteifungsplatte
- 42a, b: Verbreiterung

- 50: zweite Versteifungsplatte
- 52a, b: Verbreiterung

- α₁,α₂: Winkel

- B_{S1}: Breite des ersten Schenkels
- B_{S2}: Breite des zweiten Schenkels

- D₁: Dicke der Aufliegerplatte
- D₂: Dicke der ersten Versteifungsplatte
- D₃: Dicke der zweiten Versteifungsplatte

- E: Ebene der Aufliegerplatte

- L: Längsrichtung

- Q: Querrichtung

## Patentansprüche

1. Satteldrehplateau (10) für einen Sattelauflieger mit
- einem Drehteller (12), der einen Königszapfen (14) trägt,
- einem Drehkranz (16), in dem der Drehteller (12) drehbar angeordnet ist und
- einer Aufliegerplatte (20), an der der Drehkranz (16) befestigt ist,
wobei die Aufliegerplatte (20) zwei sich in Längsrichtung L des Satteldrehplateaus (10) erstreckende Längsränder (24a, b) und zwei sich in Querrichtung Q des Satteldrehplateaus (10) erstreckende Querränder (26a, b) aufweist, **dadurch gekennzeichnet,**
**dass** die Aufliegerplatte (20) am ersten Querrand (24a) einen ersten abgebogenen Schenkel (30) und am zweiten Querrand (24 b) einen zweiten abgebogenen Schenkel (32) aufweist.

2. Satteldrehplateau nach Anspruch 1, **dadurch gekennzeichnet, dass** die abgebogenen Schenkel (30, 32) sich über die gesamte Breite B der Aufliegerplatte (20) erstrecken.

3. Das Satteldrehplateau nach Anspruch 1 oder 2, **dadurch gekennzeichnet, dass** die beiden abgebogenen Schenkel (30, 32) in entgegengesetzte Richtungen weisen.

4. Satteldrehplateau nach einem der Ansprüche 1 bis 3, **dadurch gekennzeichnet, dass** der erste Schenkel (30) bezogen auf die Ebene E der Aufliegerplatte (20) um einen Winkel α₁ mit 0< α₁≤180° abgebogen ist.

5. Satteldrehplateau nach einem der Ansprüche 1 bis 4, **dadurch gekennzeichnet, dass** der zweite Schenkel (32) bezogen auf die Ebene E der Aufliegerplatte (20) um einen Winkel α₂ mit 0< α₂≤ 180° abgebogen ist.

6. Satteldrehplateau nach einem der Ansprüche 1 bis 5, **dadurch gekennzeichnet, dass** mindestens der zweite Schenkel (32) mindestens einen ersten Schenkelabschnitt (34 a) und einen zweiten Schenkelabschnitt (34 b) aufweist.

7. Satteldrehplateau nach Anspruch 6, **dadurch gekennzeichnet, dass** der erste Schenkelabschnitt (34 a) bezogen auf die Ebene E der Aufliegerplatte (20) um einen Winkel α₂ abgebogen ist und dass der zweite Schenkelabschnitt (34 b) parallel zur Ebene E der Aufliegerplatte (20) angeordnet ist.

8. Satteldrehplateau nach einem der Ansprüche 1 bis 7, **dadurch gekennzeichnet, dass** die Dicke D₁ der Aufliegerplatte (20) 8 mm bis 20 mm beträgt.

9. Satteldrehplateau nach einem der Ansprüche 1 bis 8, **dadurch gekennzeichnet, dass** die Breite B_{S1} des ersten Schenkels (30) 25 mm bis 120 mm beträgt.

10. Satteldrehplateau nach einem der Ansprüche 1 bis 9, **dadurch gekennzeichnet, dass** die Breite B_{S2} des zweiten Schenkels (32) 20 mm bis 200 mm beträgt.

11. Satteldrehplateau nach einem der Ansprüche 1 bis 10, **dadurch gekennzeichnet, dass** auf Randabschnitten an beiden Längsrändern (24a, b) der Aufliegerplatte (20) jeweils mindestens eine Versteifungsplatte (40, 50) befestigt ist.

12. Satteldrehplateau nach Anspruch 11, **dadurch gekennzeichnet, dass** die Versteifungsplatte (40, 50) bündig mit den Längsrändern (24a, b) der Aufliegerplatte abschließt.

13. Satteldrehplateau nach einem der Ansprüche 11 oder 12, **dadurch gekennzeichnet, dass** die Versteifungsplatte (40, 50) in Richtung zu den Querrändern (24a, b) Verbreiterungen (42a, b, 52a, b) aufweist.

14. Satteldrehplateau nach einem der Ansprüche 11 bis 13, **dadurch gekennzeichnet, dass** mindestens eine erste und eine zweite Versteifungsplatte (40, 50) übereinander angeordnet sind.

15. Satteldrehplateau nach einem der Ansprüche 11 bis 14, **dadurch gekennzeichnet, dass** die Größe der Versteifungsplatten (40, 50) mit zunehmendem Abstand von der Aufliegerplatte (20) abnimmt.

16. Satteldrehplateau nach einem der Ansprüche 11 bis 15, **dadurch gekennzeichnet, dass** die Dicken D₂, D₃ der Versteifungsplatten (40, 50) im Bereich von 8 mm bis 20 mm liegen.

17. Sattelauflieger mit einem Satteldrehplateau (10) nach einem der Ansprüche 1 bis 16.

## Claims

1. Rotating saddle plateau (10) for a semi-trailer, having
- a turntable (12) which carries a kingpin (14),
- a rotary ring (16) in which the turntable (12) is rotatably arranged, and
- a semitrailer plate (20) to which the rotary ring (16) is secured,
wherein the semi-trailer plate (20) has two longitudinal edges (24a, b) which extend in the longitudinal direction L of the rotating saddle plateau (10), and two transverse edges (26a, b) which extend in the transverse direction Q of the rotating saddle plateau (10), **characterised in that** the semi-trailer plate (20) has a first bent member (30) on the first transverse edge (24a) and a second bent member (32) on the second transverse edge (24b).

2. Rotating saddle plateau according to claim 1, **characterised in that** the bent members (30, 32) extend over the entire width B of the semi-trailer plate (20).

3. Rotating saddle plateau according to claim 1 or claim 2, **characterised in that** the two bent members (30, 32) are orientated in opposing directions.

4. Rotating saddle plateau according to any one of claims 1 to 3, **characterised in that** the first member (30) is bent with respect to the plane E of the semi-trailer plate (20) through an angle α₁ with 0<α₁≤180°.

5. Rotating saddle plateau according to any one of claims 1 to 4, **characterised in that** the second member (32) is bent with respect to the plane E of the semi-trailer plate (20) through an angle α₂ with 0<α₂≤180°.

6. Rotating saddle plateau according to any one of claims 1 to 5, **characterised in that** at least the second member (32) has at least a first member portion (34a) and a second member portion (34b).

7. Rotating saddle plateau according to claim 6, **characterised in that** the first member portion (34a) is bent with respect to the plane E of the semi-trailer plate (20) through an angle α₂ and **in that** the second member portion (34b) is arranged parallel with the plane E of the semi-trailer plate (20).

8. Rotating saddle plateau according to any one of claims 1 to 7, **characterised in that** the thickness D₁ of the semi-trailer plate (20) is from 8 mm to 20 mm.

9. Rotating saddle plateau according to any one of claims 1 to 8, **characterised in that** the width B_{S1} of the first member (30) is from 25 mm to 120 mm.

10. Rotating saddle plateau according to any one of claims 1 to 9, **characterised in that** the width B_{S2} of the second member (32) is from 20 mm to 200 mm.

11. Rotating saddle plateau according to any one of claims 1 to 10, **characterised in that** at edge portions at both longitudinal edges (24a, b) of the semi-trailer plate (20) at least one reinforcement plate (40, 50) is secured, respectively.

12. Rotating saddle plateau according to claim 11, **characterised in that** the reinforcement plate (40, 50) terminates flush with the longitudinal edges (24a, b) of the semi-trailer plate.

13. Rotating saddle plateau according to either claim 11 or claim 12, **characterised in that** the reinforcement plate (40, 50) has widened portions (42a, b, 52a, b) in the direction towards the transverse edges (24a, b).

14. Rotating saddle plateau according to any one of claims 11 to 13, **characterised in that** at least a first and a second reinforcement plate (40, 50) are arranged one above the other.

15. Rotating saddle plateau according to any one of claims 11 to 14, **characterised in that** the size of the reinforcement plates (40, 50) decreases with increasing spacing from the semi-trailer plate (20).

16. Rotating saddle plateau according to any one of claims 11 to 15, **characterised in that** the thicknesses D₂, D₃ of the reinforcement plates (40, 50) are in the range from 8 mm to 20 mm.

17. Semi-trailer having a rotating saddle plateau (10) according to any one of claims 1 to 16.

## Revendications

1. Plateau rotatif de sellette (10) dévolu à une semi-remorque, comprenant
- une plate-forme tournante (12) portant un pivot d'attelage (14),
- une couronne de rotation (16), dans laquelle ladite plate-forme tournante (12) est agencée de manière rotative, et
- une plaque d'assise (20), à laquelle ladite couronne de rotation (16) est fixée,
ladite plaque d'assise (20) étant pourvue de deux bords longitudinaux (24a, b) qui s'étendent dans la direction longitudinale L du plateau rotatif de sellette (10), et de deux bords transversaux (26a, b) s'étendant dans la direction transversale Q dudit plateau rotatif de sellette (10), **caractérisé par le fait**
**que** la plaque d'assise (20) comporte une première branche coudée (30), sur le premier bord transversal (26a), et une seconde branche coudée (32) sur le second bord transversal (26b).

2. Plateau rotatif de sellette selon la revendication 1, **caractérisé par le fait que** les branches coudées (30, 32) s'étendent sur toute la largeur B de la plaque d'assise (20).

3. Plateau rotatif de sellette selon la revendication 1 ou 2, **caractérisé par le fait que** les deux branches coudées (30, 32) sont orientées dans des directions opposées.

4. Plateau rotatif de sellette selon l'une des revendications 1 à 3, **caractérisé par le fait que** la première branche (30) est coudée d'un angle α₁ par rapport au plan E de la plaque d'assise (20), sachant que 0 < α₁ ≤ 180°.

5. Plateau rotatif de sellette selon l'une des revendications 1 à 4, **caractérisé par le fait que** la seconde branche (32) est coudée d'un angle α₂ par rapport au plan E de la plaque d'assise (20), sachant que 0 < α₂ ≤ 180°.

6. Plateau rotatif de sellette selon l'une des revendications 1 à 5, **caractérisé par le fait qu'**au moins la seconde branche (32) comprend au moins une première région (34a) et une seconde région (34b).

7. Plateau rotatif de sellette selon la revendication 6, **caractérisé par le fait que** la première région (34a) de la branche est coudée d'un angle α₂ par rapport au plan E de la plaque d'assise (20) ; et **par le fait que** la seconde région (34b) de ladite branche est disposée parallèlement audit plan E de ladite plaque d'assise (20).

8. Plateau rotatif de sellette selon l'une des revendications 1 à 7, **caractérisé par le fait que** l'épaisseur D₁ de la plaque d'assise (20) mesure de 8 mm à 20 mm.

9. Plateau rotatif de sellette selon l'une des revendications 1 à 8, **caractérisé par le fait que** la largeur B_{S1} de la première branche (30) mesure de 25 mm à 120 mm.

10. Plateau rotatif de sellette selon l'une des revendications 1 à 9, **caractérisé par le fait que** la largeur B_{S2} de la seconde branche (32) mesure de 20 mm à 200 mm.

11. Plateau rotatif de sellette selon l'une des revendications 1 à 10, **caractérisé par le fait qu'**au moins une platine respective de rigidification (40, 50) est fixée aux deux bords longitudinaux (24a, b) de la plaque d'assise (20), dans des régions marginales.

12. Plateau rotatif de sellette selon la revendication 11, **caractérisé par le fait que** la platine de rigidification (40, 50) se trouve dans l'affleurement des bords longitudinaux (24a, b) de la plaque d'assise.

13. Plateau rotatif de sellette selon l'une des revendications 11 ou 12, **caractérisé par le fait que** la platine de rigidification (40, 50) présente des zones élargies (42a, b, 52a, b) en direction des bords transversaux (26, b).

14. Plateau rotatif de sellette selon l'une des revendications 11 à 13, **caractérisé par le fait qu'**au moins des première et seconde platines de rigidification (40, 50) sont agencées en superposition.

15. Plateau rotatif de sellette selon l'une des revendications 11 à 14, **caractérisé par le fait que** le dimensionnement des platines de rigidification (40, 50) décroît au fur et à mesure de l'accroissement de la distance vis-à-vis de la plaque d'assise (20).

16. Plateau rotatif de sellette selon l'une des revendications 11 à 15, **caractérisé par le fait que** les épaisseurs D₂, D₃ des platines de rigidification (40, 50) se situent dans la plage de 8 mm à 20 mm.

17. Semi-remorque équipée d'un plateau rotatif de sellette (10) conforme à l'une des revendications 1 à 16.
